# Europäisches Patentamt
# European Patent Office
# Office européen des brevets

(11) Publication number: **0 161 430**
**B1**

(12) **EUROPEAN PATENT SPECIFICATION**

(45) Date of publication of patent specification: **09.11.88**

(21) Application number: **85103408.2**

(22) Date of filing: **06.08.81**

(60) Publication number of the earlier application in accordance with Art. 76 EPC: **0 045 954**

(51) Int. Cl.⁴: **F 16 F 9/34**

(54) **Shock absorber.**

(30) Priority: **07.08.80 JP 108965/80**

(43) Date of publication of application:
**21.11.85 Bulletin 85/47**

(45) Publication of the grant of the patent:
**09.11.88 Bulletin 88/45**

(84) Designated Contracting States:
**DE FR GB**

(56) References cited:
**FR-A- 845 638**
**GB-A- 600 386**
**GB-A-2 044 882**
**US-A-3 220 517**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Fukushima, Naoto**
**17-15, Oogigayatsu 2-chome**
**Fujisawa-shi Kanagawa-ken (JP)**
Inventor: **Iwata, Kazuroh**
**1136-331, Imaizumi**
**Kamakura-shi Kanagawa-ken (JP)**
Inventor: **Hidaka, Kunihiko**
**47-13, Sugita 8-chome Isogo-ku**
**Yokohama-shi Kanagawa-ken (JP)**

(74) Representative: **Patentanwälte TER MEER - MÜLLER - STEINMEISTER**
**Mauerkircherstrasse 45**
**D-8000 München 80 (DE)**

Courier Press, Leamington Spa, England.

## Description

The invention relates to a hydraulic shock absorber including a piston movably disposed within a cylinder to define first and second working chambers, the piston defining first and second axially spaced vortex chambers, each vortex chamber being associated with a respective central opening communicating with a respective working chamber and a plurality of passages opening tangentially into the periphery of the vortex chamber.

A shock absorber of this kind was disclosed by the FR—A—845 638. Figure 8 of this reference shows a shock absorber having a piston defining first and second axially spaced vortex chambers separated by a partition. Tangential passages connect the vortex chambers with a ring shaped chamber provided inside the piston and surrounding the vortex chambers. Because of the space needed for the ring shaped chamber, the radial extension of the vortex chambers and thus the volume thereof is limited.

In an automotive vehicle suspension, experimentally obtained piston stroke in various vehicle driving conditions would be approximated as follows:

| | |
|---|---|
| abrupt turning | 40 mm |
| rapid acceleration | 50 mm |
| lane change | 35 mm |
| crossing bump | 3 mm |
| smooth road | 2 mm |
| rough road | 14 mm |

The vehicle driving condition in turning abruptly, rapid acceleration or change lanes requires a relatively high damping force for providing sufficient driving stability. On the other hand, in driving over small bumps, on a smooth road or on a relatively rough road, the suspension would be better sufficiently soft for preventing rough ride feeling. Therefore, the shock absorber has to produce relatively high damping force in response to relatively large piston stroke and to produce relatively small damping force in response to relatively small piston stroke.

Shock absorber pistons having vortex chambers are fullfilling these requirements. Pistons having two vortex chambers to produce a damping force both in the compression and the expansion stroke are further known per se from the DE—C—697 779, the US—A—3 330 517 and the GB—A—600 386.

It is an object of the invention to provide a shock absorber of the above kind designated for easy manufacturing and compact size.

The shock absrober according to the invention is characterized in that the piston comprises first and second members secured together with a partition plate therebetween, such that the first vortex chamber is defined between the first member and the partition plate and the second vortex chamber is defined between the second member and the partition plate, the tangential passages of the first vortex chamber communicating with respective ones of the second vortex chamber via respective aligned axially extending recesses in the peripheries of the first and second members.

The present invention will be more fully understood from the detailed description given herebelow and from the accompanying drawings of the preferred embodiment of the present invention, which, however, should not be taken as limitative of the invention but for elucidation and explanation only.

In the drawings:

Fig. 1 is a longitudinal section of a preferred embodiment of a shock absorber according to the present invention;

Fig. 2 is an enlarged section of a piston used in the shock absorber of Fig. 1;

Fig. 3 is an enlarged transverse section of the piston taken along line A—A of Fig. 2.

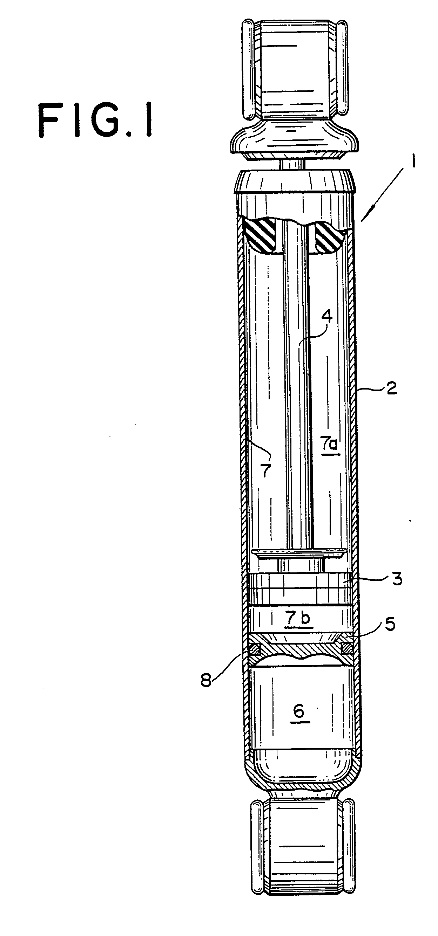

Referring now to the drawings, particularly to Figs. 1, 2 and 3, there is illustrated a preferred embodiment of a shock absorber 1 in accordance with the present invention. The shock absorber comprises a cylindrical tube or cylinder 2 and a piston 3 movably disposed therein for movement along the longitudinal axis of the cylinder. The piston is secured on the lower end of a piston rod 4 which has an upper end extending from the cylinder 2 and attached to a vehicle body chassis (not shown). On the other hand, the lower end of the cylinder 2 is attached to a wheel axle (not shown). A free piston 5 with an annular sealing ring 8 is also disposed within the cylinder 2 to define therein a pneumatic chamber 6. A chamber 8 defined above the free piston 5 is filled with a working fluid. The chamber 7 is divided into an upper chamber 7a and a lower chamber 7b by the piston 3.

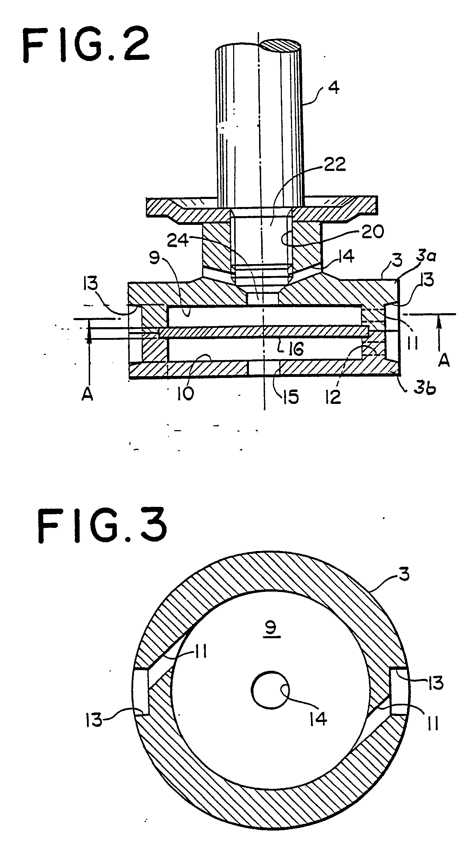

As shown in Figs. 1 and 2, the piston 3 comprises first and second members 3a, 3b, secured together with a partition place 16 (Fig. 2) therebetween. As shown in Fig. 2, the piston 3 is formed with a pair of vortex chambers 9 and 10 of circular transverse section, the first vortex chamber 9 being defined between the first member 3a and the partition plate 16 and the second vortex chamber 10 being defined between the second member 3b and the partition plate 16.

The piston 3 is further formed with recesses 13 on the outer circumference. The upper vortex chamber 9 communicates with the recesses 13 via fluid passages 11, each of which has an outer end opening into the recesses 13 and an inner end opening into the vapor vortex chamber 9 in a direction substantially tangentially with respect to the circle of the upper vortex chamber 9. Likewise, the lower vortex chamber 10 communicates with the recesses 13 via fluid passages 12. Each of the fluid passages 12 has an outer end opening into the recesses 13 and an inner end opening into the lower vortex chamber 10 in a direction substantially tangentially with respect to the lower vortex chamber 10. Thus, the upper and lower vortex chambers 9 and 10 communicate with one another via the fluid passages 11, the recesses 13 and the fluid passages 12.

The upper vortex chamber 9 also communicates with the upper chamber 7a via fluid passages 14 radially extending from a threaded opening 20 for engagement with the threaded end 22 of the piston rod 4, and an opening 24 for communication between the threaded opening 20 and the upper vortex chamber 9. On the other hand, the lower vortex chamber 10 communicates with the lower chamber 7b via an opening 15 formed in the bottom of the lower vortex chamber 10.

In operation, if the vehicle is subject to a shock from a road, a suspension spring of the vehicle suspension mechanism is displaced to absorb the shock. The vehicle will move up and down due to displacement of the suspension spring until the spring returns to normal state. At this time, the shock absorber works to reduce the vehicle vibration by absorbing the shock.

In the compression stroke of the piston 3, the piston 3 travels downwardly to expand the volume of the upper chamber 7a and, in turn, to reduce the volume of the lower chamber 7b. Corresponding to the piston stroke, the fluid pressure in the upper chamber 7a is reduced and the fluid pressure in the lower chamber 7b is increased to create a pressure difference between the chambers 7a, 7b. As a result, the fluid in the lower chamber 7b flows into the upper chamber 7a via the piston 3. The fluid in the chamber 7b enters the lower vortex chamber 10 through the opening 15. The fluid flows via the lower vortex chamber 10, the fluid passages 12, the recesses 13 and the fluid passages 11 into the upper vortex chamber 9. From the fluid passages 11, the fluid is discharged into the upper vortex chamber 9 substantially tangentially with respect to the circle of the upper vortex chamber in order to produce a vortex therein. Thereafter, the fluid flows into the upper chamber 7a via the opening 24 and the passages 14. At the same time, the fluid passages 11 and 12 serve as orifices to limit the flow amount of the fluid. In the compression stroke, therefore, the shock absorber 1 absorbs the shock applied to the vehicle by the vortex-and-orifice effect, both serving to limit the fluid flow.

Likewise, in the expansion stroke of the piston 3, the volume of the upper chamber 7a is reduced and the volume of the lower chamber 7b is increased to induce fluid flow via the piston 3. During the fluid flow through the vortex chambers 9 and 10, a vortex is produced in the lower vortex chamber 10 in order to generate the shock absorbing force.

### Claim

Hydraulic shock absorber including a piston (3) movably disposed within a cylinder (2) to define first and second working chambers (7a, 7b), the piston defining first and second axially spaced vortex chambers (9, 10), each vortex chamber being associated with a respective central opening (15, 24) communicating with a respective working chamber and a plurality of passages (11, 12) opening tangentially into the periphery of the vortex chamber, characterized in that the piston (3) comprises first and second members (3a, 3b) secured together with a partition plate (16) therebetween, such that the first vortex chamber (9) is defined between the first member (3a) and the partition plate and the second vortex chamber (10) is defined between the second member (3b) and the partition plate (16), the tangential passages (11) of the first vortex chamber (9) communicating with respective ones (12) of the second vortex chamber (10) via respective aligned axially extending recesses (13) in the peripheries of the first and second members.

### Patentanspruch

Hydraulischer Stoßdämpfer mit einem Kolben (3), der beweglich innerhalb eines Zylinders (2) angeordnet ist und erste und zweite Arbeitskammern (7a, 7b) bildet, welcher Kolben erste und zweite in axialem Abstand liegende Wirbelkammern (9, 10) enthält, welchen Wirbelkammern jeweils eine zentrale Öffnung (15, 24) zugeordnet ist, die eine Verbindung schafft zu jeweils einer Arbeitskammer, und eine Anzahl von Kanälen (11, 12), die tangential in den Umfang der Wirbelkammern münden, dadurch gekennzeichnet, daß der Kolben (3) erste und zweite Teile (3a, 3b) umfaßt, die miteinander unter Einfügung einer Trennplatte (16) verbunden sind, so daß die erste Wirbelkammer (9) zwischen dem ersten Teil (3a) und der Trennplatte und die zweite Wirbelkammer (10) zwischen dem zweiten Teil (3b) und der Trennplatte (16) liegt, welche tangentialen Kanäle (11) der ersten Wirbelkammer (9) mit entsprechenden Kanälen (12) der zweiten Wirbelkammern (10) über ausgerichtete, axial verlaufende Ausnehmungen (30) auf dem Umfang des ersten und zweiten Teiles in Verbindung stehen.

### Revendication

Amortisseur hydraulique comprenant un piston (3) disposé de façon mobile à l'intérieur d'un cylindre (2) pour définir une première et une seconde chambres de travail (7a, 7b), le piston définissant une première et une seconde chambres de tourbillon (9, 10) espacées axialement, chaque chambre de tourbillon étant associée à un orifice central (15, 24) respectif, communiquant avec une chambre de travail respective et une pluralité de passages (11, 12) débouchant tangentiellement dans la périphérie de la chambre de tourbillon, caractérisé en ce que le piston (3) comprend des premier et second éléments (3a, 3b) fixés ensemble avec une plaque de séparation (16) entre eux, de telle façon que la première chambre de tourbillon (9) est définie entre le premier élément (3a) et la plaque de séparation et que la deuxième chambre en tourbillons (10) est définie entre le deuxième élément (3b) et la plaque de séparation (16), les passages tangentiels (11) de la première chambre de tourbillon (9) communiquant avec les passages respectifs (12) de la seconde chambre de tourbillon (10) par l'intermédiaire d'évidements respectifs alignés (13) s'étendant axialement dans les périphéries des première et seconde chambres.

# FIG.1

# FIG.2

# FIG.3